# EUROPEAN PATENT SPECIFICATION

(11) **EP 3 081 654 B1**
(45) Date of publication and mention of the grant of the patent: **03.10.2018**
(21) Application number: 13898893.6
(22) Date of filing: 24.12.2013
(51) Int. Cl.: C21B 13/00, C21B 13/02, C21B 13/14

(54) **MOLTEN IRON MANUFACTURING METHOD AND MOLTEN IRON MANUFACTURING APPARATUS**
EISENSCHMELZEHERSTELLUNGSVERFAHREN UND EISENSCHMELZEHERSTELLUNGSVORRICHTUNG
PROCÉDÉ ET APPAREIL DE FABRICATION DE FER EN FUSION

(30) Priority: 10.12.2013 KR 20130153268
(43) Date of publication of application: 19.10.2016
(73) Proprietor: Posco, Pohang-si, Gyeongsangbuk-do 37859 (KR)
(72) Inventor: SHIN, Myoung Kyun, Pohang-si Gyeongsangbuk-do 790-300 (KR); KIM, Sang-Hyun, Pohang-si Gyeongsangbuk-do 790-300 (KR)
(74) Representative: Zech, Stefan Markus
(86) International application number: PCT/KR2013/012113
(87) International publication number: WO 2015/088092

(56) References cited:
- EP-A2- 2 641 981
- WO-A1-2008/078891
- WO-A1-2009/100819
- GB-A- 2 239 261
- JP-B2- H0 627 285
- JP-B2- H0 788 525
- KR-A- 20100 132 005
- KR-A- 20120 038 017

## Description

### [Technical Field]

The present invention relates to a molten iron manufacturing method and a molten iron manufacturing apparatus, and more particularly, to a molten iron manufacturing method and a molten iron manufacturing apparatus capable of increasing reducing power of a reducing gas and decreasing coal consumption by improving a discharge gas reforming circulating device of a fluidized-bed reduction reactor.

### [Background Art]

In a smelting reduction process, a fluidized-bed reduction reactor for reducing iron ore and a melter-gasifier for melting iron ore are employed. When the iron ore is melted by the melter-gasifier, coal briquettes obtained by agglomerating coal as a heat source for melting the iron ore are charged to the melter-gasifier. Herein, reduced iron is melted in the melter-gasifier, and then is converted into molten iron and slag to be discharged to the outside.

A discharge gas discharged from the fluidized-bed reduction reactor is cooled by passing through a water collector. Some of the discharge gas is branched and compressed by using a discharge gas reforming circulating device, and carbon dioxide is removed therefrom. Then, the discharge gas is mixed with a reducing gas discharged from the melter-gasifier, and the mixed reducing gas is additionally supplied to the fluidized-bed reduction reactor. Accordingly, reduction efficiency of the iron ore in the fluidized-bed reduction reactor is improved. An example disclosure of such a process can be found in WO 2009/100819 A1. However, since a large amount of nitrogen is included in the additionally supplied reducing gas, there is a limit in improving the reducing power of the reducing gas.

GB 2 239 261 A describes a process for the direct reduction of metal oxides. For this, a reduction reactor with a combined reforming-reduction zone is provided, in which a reformed reduction gas rich in H₂ and CO and having a predetermined oxidation degree is formed and reduction is carried out simultaneously in the combined reforming-reduction zone.

### [DISCLOSURE]

### [Technical Problem]

The present invention has been made in an effort to provide a molten iron manufacturing method having advantages of being capable of improving reducing power of reduced iron in a reduction reactor by generating a reformed gas with a hydrocarbon gas. The present invention has also been made in an effort to provide a molten iron manufacturing apparatus having advantages of being capable of improving reducing power of reduced iron in a reduction reactor by generating a reformed gas with a hydrocarbon gas.

### [Technical Solution]

An exemplary embodiment of the present invention provides an molten iron manufacturing method including: i) supplying a discharge gas from a reduction reactor that converts iron ore to reduced iron; ii) supplying a mixed gas that is obtained by mixing some branched discharge gas and a hydrocarbon gas; iii) supplying a reformed gas by reforming the mixed gas; and iv) injecting a reducing gas, discharged from a melter-gasifier connected with the reduction reactor to receive the reduced iron, and the reformed gas, into the reduction reactor, wherein the supplying of the reformed gas includes supplying some of the reduced iron as a reforming reaction catalyst, and reforming the mixed gas by using the reforming reaction catalyst.

The reduced iron may be directly supplied from the reduction reactor in the supplying of the reduced iron as the reforming reaction catalyst. The molten iron manufacturing method may further include agglomerating the reduced iron by compressing it, and the reduced iron may be agglomerated and supplied in the supplying of the reduced iron as the reforming reaction catalyst. The molten iron manufacturing method may further include recovering the reduced iron used as the reforming reaction catalyst and supplying it to the melter-gasifier.

The reformed gas may be generated in at least one reformer to which the reduced iron in the supplying of the reformed gas is charged, and nitrogen may be supplied to the reformer. The mixed gas may be annularly rotated in the reformer and injected in a circumferential direction. The reformed gas may be generated in a plurality of reformers to which the reduced iron is charged to be used as the reforming reaction catalyst in the supplying of the reformed gas, and the reformers may include a first reformer and a second reformer. The reduced iron may be charged into the second reformer after charging of the reduced iron into the first reformer is completed. When a differential pressure of the first reformer is equal to or higher than a predetermined value, an inflow of the mixed gas into the first reformer may be blocked, and a reformed gas may be generated in the second reformer by supplying the mixed gas to the second reformer. When a differential pressure of the first reformer is equal to or higher than a predetermined value, the reformed gas may be externally outputted. After the reformed gas of the first reformer is discharged, the first reformer may be purged, the reforming reaction catalyst included in the first reformer may be discharged, and the reduced iron may be supplied to the first reformer. In the supplying of the reformed gas, the reduced iron may be continuously charged to and discharged from the reformer that generates the reformed gas.

The supplying of the reformed gas may include: i) providing a plurality of reduced iron charging hoppers connected to the reformer in front thereof and a plurality of reduced iron discharging hoppers connected to the reformer in back thereof; ii) adjusting a differential pressure between the reduced iron charging hoppers; iii) charging the reduced iron to the reformer through the reduced iron charging hoppers; iv) adjusting a differential pressure between the reduced iron discharging hoppers; and v) discharging said some reduced iron from the reformer through the reduced iron discharging hoppers.

The molten iron manufacturing method may further include: performing primary heating on the mixed gas by allowing it to indirectly contact the discharge gas; and performing secondary heating on the mixed gas by using oxygen. The discharge gas may be cooled and cleaned in the supplying of the discharge gas. The mixed gas may be heated to 1000 °C or less in the performing of the primary heating on the mixed gas. The mixed gas may be heated in a range of 1100 °C to 1200 °C in the performing of the secondary heating on the mixed gas. The reduction reactor may include a packed-bed reduction reactor or a plurality of fluidized-bed reduction reactors in the supplying of the discharge gas. When the reduction reactor includes the fluidized-bed reduction reactors, a mixture obtained by mixing the reducing gas and the reformed gas may be supplied to each of the fluidized-bed reduction reactors.

An exemplary embodiment of the present invention provides an molten iron manufacturing apparatus including: i) a reduction reactor configured to reduce iron ore into reduced iron; ii) a melter-gasifier connected with the reduction reactor to manufacture molten iron by receiving the reduced iron and to supply a reducing gas to the reduction reactor; iii) a discharge gas pipe connected with the reduction reactor to pass a discharge gas discharged from the reduction reactor therethrough; iv) a discharge gas branch pipe connected with the discharge gas pipe to pass another discharge gas that is branched from the discharge gas, and to receive a hydrocarbon gas and supply a mixed gas obtained by mixing the hydrocarbon gas with the discharge gas; v) at least one reformer connected with the reduction reactor to receive some of the reduced iron, and connected with the discharge gas branch pipe to supply a reformed gas by reforming the mixed gas by said some reduced iron; vi) a supply gas pipe configured to supply the reducing gas to the melter-gasifier by connecting the reduction reactor with the melter-gasifier; and vii) a reformed gas pipe configured to connect the reformer with the supply gas pipe, and to supply a mixture obtained by mixing the reformed gas with the reducing gas to the melter-gasifier.

The molten iron manufacturing apparatus may further include a heat exchanger connected with the discharge gas pipe and the discharge gas branch pipe, to heat the mixed gas by the discharge gas. The molten iron manufacturing apparatus may further include a compacted iron manufacturing device connected with the reduction reactor and the melter-gasifier, to supply compacted iron obtained by agglomerating the reduced iron to the melter-gasifier, and connected with the reformer to supply said some reduced iron as the compacted iron.

The molten iron manufacturing apparatus may further include: a compacted iron supplying pipe configured to connect the compacted iron manufacturing device with the reformer, and to supply the compacted iron to the reformer; and
a compacted iron returning pipe configured to connect the compacted iron manufacturing device with the reformer, and to return other compacted iron that has completely been used to the compacted iron manufacturing device. The molten iron manufacturing apparatus may further include: a first heater connected with the heat exchanger and the discharge gas pipe to heat the mixed gas by receiving and combusting the discharge gas; and a second heater connected with the first heater to re-heat the mixed gas by receiving oxygen.

The reformer may include a plurality of reformers including a reforming reaction catalyst, and the reformers may include a first reformer and a second reformer. The molten iron manufacturing apparatus may further include: i) a mixed gas supplying pipe configured to connect the heat exchanger with the first reformer and the second reformer; ii) a purge gas supplying pipe connected to the first reformer and the second reformer; and iii) a discharge gas pipe connected to the first reformer and the second reformer. The molten iron manufacturing apparatus may further include: i) a pressure gauge mounted in each of the first reformer and the second reformer to measure each internal pressure of the first reformer and the second reformer; ii) a differential pressure gauge mounted in each of the first reformer and the second reformer to measure a difference between pressures of upper portions of the first reformer and the second reformer and an internal pressure of the mixed gas supplying pipe by connecting the upper portions thereof with the mixed gas supplying pipe; and iii) a level meter mounted in each of the first reformer and the second reformer to measure a height of the reforming reaction catalyst.

The molten iron manufacturing apparatus may further include: i) a plurality of reduced iron charging hoppers disposed in front of the reformer and connected in series with the reformer; and ii) a plurality of reduced iron discharging hoppers disposed in back of the reformer and connected in series with the reformer. The molten iron manufacturing apparatus may further include an inert gas injecting pipe mounted in at least one of the reduced iron charging hoppers and the reduced iron discharging hoppers to pressurize an inside of the hopper by injecting an inert gas into the hopper.

The reformer may include an annular mixed gas supplier to surround a center of the reformer, a plurality of openings may be separately formed at a predetermined interval in the mixed gas supplier, and the mixed gas may be injected into the reformer through the openings. The reduction reactor includes a packed-bed reduction reactor or a plurality of fluidized-bed reduction reactors. When the reduction reactor includes the fluidized-bed reduction reactors, the supply gas pipe may be configured to connect each of the fluidized-bed reduction reactors with the melter-gasifier.

### [Advantageous Effects]

It is possible to reduce coal consumption by using a molten iron manufacturing apparatus. Further, since a reducing gas is additionally supplied to a fluidized-bed reduction reactor by reforming a hydrocarbon gas, it is possible to efficiently prevent nitrogen integration in the reducing gas. As a result, it is possible to improve reduction operation efficiency of iron ore of the fluidized-bed reduction reactor. In addition, in the molten iron manufacturing apparatus, iron-manufacturing coal and the hydrocarbon gas are used together to additionally provide a means for economically producing molten iron by using a hydrocarbon gas, and thus it is possible to more flexibly select a molten iron manufacturing process depending on a fuel condition and a raw material condition for each region in the world.

### [Description of the Drawings]

FIG. 1 schematically illustrates a molten iron manufacturing apparatus according to a first exemplary embodiment of the present invention.
FIG. 2 schematically illustrates a reformer included in the molten iron manufacturing apparatus shown in FIG. 1.
FIG. 3 is a cross-sectional view schematically illustrating an inside of a reformer taken along a line III-III of FIG. 2.
FIG. 4 is a graph illustrating a conversion rate of hydrocarbon to a reducing gas according to passage of a contact time with reduced iron.
FIG. 5 schematically illustrates a modification of the reformer included in the molten iron manufacturing apparatus shown in FIG. 1.
FIG. 6 schematically illustrates a molten iron manufacturing apparatus according to a second exemplary embodiment of the present invention.
FIG. 7 schematically illustrates a molten iron manufacturing apparatus according to a third exemplary embodiment of the present invention.

### [Mode for Invention]

The terminologies used herein are used just to illustrate a specific exemplary embodiment, but are not intended to limit the present invention. It must be noted that, as used in the specification and the appended claims, the singular forms used herein include plural forms unless the context clearly dictates the contrary. It will be further understood that the term "comprises" or "includes", used in this specification, specifies stated properties, regions, integers, steps, operations, elements, and/or components, but does not preclude the presence or addition of other properties, regions, integers, steps, operations, elements, components, and/or groups.

Spatially relative terms such as "below" and "above" and the like may be used herein for ease of description to describe one element or feature's relationship to another element(s) or feature(s) as illustrated in the figures. It will be understood that spatially relative terms are intended to encompass different orientations of the device in use or operation in addition to the orientation depicted in the drawings. For example, if the device in the figures is turned over, elements described as "below" other elements or features would then be oriented "above" the other elements or features. Thus, the exemplary term "below" can encompass both an orientation of above and below. Apparatuses may be otherwise rotated 90 degrees or by other angles, and the spatially relative descriptors used herein are then interpreted accordingly.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art, and will not be interpreted in an idealized or overly formal sense unless expressly so defined herein.

A term "carbonaceous material" used hereinafter indicates a material containing carbon. Accordingly, examples of the carbon material may include all materials containing carbon, such as coal, coke, and carbon dust.

A "hydrocarbon gas" used hereinafter indicates all gases containing a hydrocarbon. Accordingly, the hydrocarbon gas may be a gas exclusively formed of a hydrocarbon or may be a gas containing a hydrocarbon.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

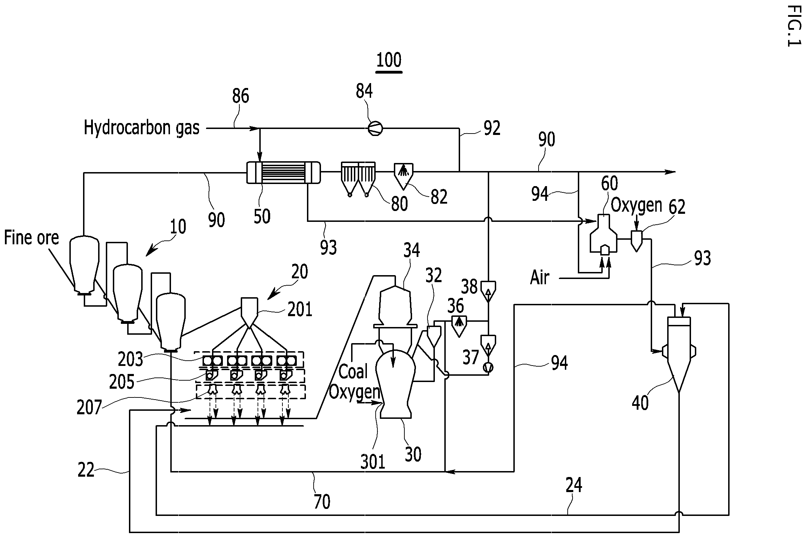

FIG. 1 schematically illustrates a molten iron manufacturing apparatus 100 according to a first exemplary embodiment of the present invention. The molten iron manufacturing apparatus 100 shown in FIG. 1 is merely an example for describing the present invention, and the present invention is not limited thereto. Accordingly, the molten iron manufacturing apparatus 100 may be modified to another form.

As shown in FIG. 1, the molten iron manufacturing apparatus 100 includes a fluidized-bed reduction reactor 10, a compacted iron manufacturing device 20, a melter-gasifier 30, a reformer 40, a heat exchanger 50, and heaters 60 and 62. If necessary, the molten iron manufacturing apparatus 100 may further include other devices. Detailed internal structures of such devices can be easily understood by those skilled in the art to which the present invention pertains, and a detailed description thereof will be omitted.

Molten iron is manufactured in the melter-gasifier 30. Oxygen is injected through a tuyere 301 of the melter-gasifier 30, and coal and reduced iron are charged through an upper portion of the melter-gasifier 30. The coal forms a coal-packed bed in the melter-gasifier 30. Coal briquettes, a lump carbonaceous material, or the like may be employed as the coal, and lump coal may be employed as the lump carbonaceous material.

Coal charged to the melter-gasifier 30 is combusted by using oxygen injected though the tuyere 301. Thus-generated combustion heat is used for manufacturing molten iron. Further, a high-temperature reducing gas such as CO or H₂ is supplied to a dome-like portion of the melter-gasifier 30 by passing through the packed bed formed in the melter-gasifier 30. The high-temperature reducing gas is discharged from the melter-gasifier 30 and passes through a dust circulation device 32. The dust circulation device 32 separates a large amount of carbon-containing dust included in the high-temperature reducing gas from other materials, and re-injects the separated carbon-containing dust to the melter-gasifier 30. The reducing gas from which the carbon-containing dust is removed is supplied to the fluidized-bed reduction reactor 10.

Meanwhile, a water collector 36 branches some of the gas separated from the carbon-containing dust in the dust circulation device 32 to cool and clean the branched gas. Further, a gas-circulating cooler 37 additionally cleans some of the gas which is cooled and dust-removed in the water collector 36. A temperature of the reducing gas supplied to the fluidized-bed reduction reactor 10 is controlled by heating the gas and circulating it as the reducing gas supplied from the melter-gasifier 30. In addition, an excess gas discharging device 38 additionally dust-removes some of the gas which is cooled and dust-removed in the water collector 36, and discharges it depending on a pressure of the melter-gasifier 30 in order to adjust an internal pressure of the melter-gasifier 30.

Iron ore is reduced in the fluidized-bed reduction reactor 10. The fluidized-bed reduction reactor 10 is formed to include a plurality of stages, which are sequentially connected to reduce fine ore to reduced iron. A bubbling fluidized bed is formed in each stage of the fluidized-bed reduction reactor 10. Accordingly, in the fluidized-bed reduction reactor 10, reduced iron may be manufactured by fluidizing and reducing fine ore. Meanwhile, a sub-material may be further mixed to prevent the fine ore from adhering to an inside of the fluidized-bed reduction reactor 10.

The compacted iron manufacturing device 20 includes a reduced iron storage tank 201, a pair of rolls 203, a disintegrator 205, and a distributing chute 207. In addition, the compacted iron manufacturing device 20 may further include other components if necessary. The reduced iron storage tank 201 temporally stores the reduced iron supplied from the fluidized-bed reduction reactor 10. Compacted iron is prepared by receiving reduced iron from a pair of rolls 203 and compressing it in order to prevent scattering and acquire air permeability at the melter-gasifier 30. The disintegrator 205 disintegrates the compressed compacted iron to a predetermined size. The distributing chute 207 appropriately distributes the compacted iron to a plurality of compacted iron storage tanks (not illustrated).

A high-temperature equalizing & relief system 34 is disposed between the compacted iron manufacturing device 20 and the melter-gasifier 30. The high-temperature equalizing & relief system 34 is mounted over the melter-gasifier 30 in order to adjust a pressure. An internal pressure of the melter-gasifier 30 is high, and thus the high temperature equalizing & relief system 34 can readily charge the compacted iron to the melter-gasifier 30 by uniformly adjusting the pressure. As a result, when the compacted iron is supplied to the melter-gasifier 30, a supply pressure thereof is appropriately adjusted while passing through the high temperature equalizing & relief system 34.

A supply gas pipe 70 supplies a reducing gas discharged from the coal-packed bed of the melter-gasifier 30 to the fluidized-bed reduction reactor 10. As a result, iron ore can be converted into reduced iron in the fluidized-bed reduction reactor 10 by a supply gas supplied through the supply gas pipe 70.

As shown in FIG. 1, a discharge gas discharged from the fluidized-bed reduction reactor 10 passes through the heat exchanger 50, which has an exhaust heat recovery function for recovering a sensible heat of the discharge gas. A dry dust collector 80 is disposed in back of the heat exchanger 50 to separate and remove dust included in the discharge gas. Further, a water cooling device 82 is disposed in back of the dry dust collector 80 to cool the discharge gas.

A discharge gas branch pipe 92 is disposed in back of the water cooling device 82 to branch and transport some of the discharge gas. A compressor 84 compresses the branched discharge gas. A hydrocarbon gas supplying pipe 86 is connected to the discharge gas branch pipe 92 in back of the compressor 84 in order to supply a mixed gas obtained by mixing hydrocarbon gas into the discharge gas. The mixed gas is heated while passing through the heat exchanger 50, and is supplied to a first heater 60 through a gas pipe 94. Meanwhile, the gas pipe 94 is branched from a discharge gas pipe 90 and is connected to the first heater 60 to heat the mixed gas by supplying the discharge gas as a fuel. Further, air is supplied to the first heater 60 for combustion. Herein, the first heater 60 may adjust a temperature of the mixed gas to 1000 °C or less. If the temperature of the mixed gas is too high, e.g., is higher than 1000 °C, a heating tube formed of a heat-resisting metal included in the first heater 60 may be damaged. Accordingly, it is required to adjust the temperature of the mixed gas to 1000 °C or less.

A second heater 62 is disposed in back of the first heater 60. The second heater 62 partially combusts the mixed gas heated by the first heater 60 by injecting oxygen thereinto. As a result, the mixed gas is secondarily heated in a temperature range of 1100 °C to 1200 °C. If the secondary heating temperature is too high, compacted iron contacting the mixed gas may be adhered to an inside of the reformer 40. If the secondary heating temperature is too low, there is no sense for the secondary heating. Accordingly, it is required to adjust the secondary heating temperature of the mixed gas in the aforementioned range.

The mixed gas that is additionally heated by the first heater 60 and the second heater 62 is supplied to the reformer 40 through a mixed gas pipe 93 connected to the reformer 40. The reformer 40 receives the high-temperature mixed gas and reforms components of CO₂ and H₂O included in the hydrocarbon and the discharge gas included in the mixed gas into components of the reducing gas. The reformed gas treated by the reformer 40 is mixed with a coal-based reducing gas generated in the melter-gasifier 30 to be supplied to the fluidized-bed reduction reactor 10 through the gas pipe 94 which is connected to the dust circulating device 32 in back thereof.

Meanwhile, the reformer 40 is connected with the compacted iron manufacturing device 20 through a compacted iron supplying pipe 22 and a compacted iron returning pipe 24. The compacted iron supplying pipe 22 supplies the compacted iron manufactured in the compacted iron manufacturing device 20 to the reformer 40. The compacted iron returning pipe 24 returns other compacted iron that has been completely used as a reforming reaction catalyst in the reformer 40 to supply it to the compacted iron manufacturing device 20 and the melter-gasifier 30. Although not shown in FIG. 1, some of the reduced iron discharged from the fluidized-bed reduction reactor 10 may be directly supplied to the reformer 40. In this case, since a particle size of some reduced iron is small, surface areas thereof are increased. Accordingly, it is possible to improve efficiency in which the reduced iron is used as a reforming reaction catalyst. Hereinafter, an operating process of the molten iron manufacturing apparatus 100 shown in FIG. 1 will be described in further detail. The operating process of the molten iron manufacturing apparatus 100 is merely an example of the present invention, and the present invention is not limited thereto.

First, a high-temperature discharge gas discharged after iron ore is reduced in the fluidized-bed reduction reactor 10 passes through the heat exchanger 50, and dust included in the discharge gas is separated and removed in the dry dust collector 80. Thereafter, the discharge gas is cooled to room temperature in the water cooling device 82. Some of the discharge gas of the reactor 10 that is dust-removed and cooled is branched and is pressurized by the compressor 84 to be mixed with the hydrocarbon gas. As a result, some discharged gas is supplied as a mixed gas. The mixed gas is heated by contacting the discharge gas in the heat exchanger 50, and is introduced into the first heating furnace 60 to be primarily heated by indirectly contacting a high temperature gas by combusting the discharge gas of the reactor 10 that is dust-removed and cooled. The mixed gas is secondarily heated in the second heating furnace 62. In the second heating furnace 62, the mixed gas is heated by directly injecting oxygen into the mixed gas and combusting it. As a result, a temperature of the mixed gas is controlled depending on a reaction heat for converting the mixed gas into a reducing gas and a sensible heat required for acquiring a temperature of the converted reducing gas, in the reformer 40. In the reformer 40, the mixed gas heated in the second heater 62 is converted into the reducing gas such as CO or H₂ by a chemical reaction represented by Chemical Formula 1.

[Chemical Formula 1] CH₄ + CO₂ → CO + 2H₂ CH₄ + H₂O → 2CO + 3H₂

The reduced iron is employed as a catalyst for catalyzing the aforementioned reaction in order to increase a speed of the reforming reaction and a reaction amount. The compacted iron manufacturing device 20 is connected to the reformer 40 to supply compacted iron serving as reduced iron to the reformer 40, and receives the completely used reduced iron from the reformer 40. Specifically, the compacted iron manufacturing device 20 is connected with the reformer 40 through the compacted iron supplying pipe 22 and the compacted iron returning pipe 24. A reformed gas generated by the reduced iron in the reformer 40 is transported through the gas pipe 94, which is connected to the supply gas pipe 70 through which the reducing gas discharged from the melter-gasifier 30 is supplied to the fluidized-bed reduction reactor 20.

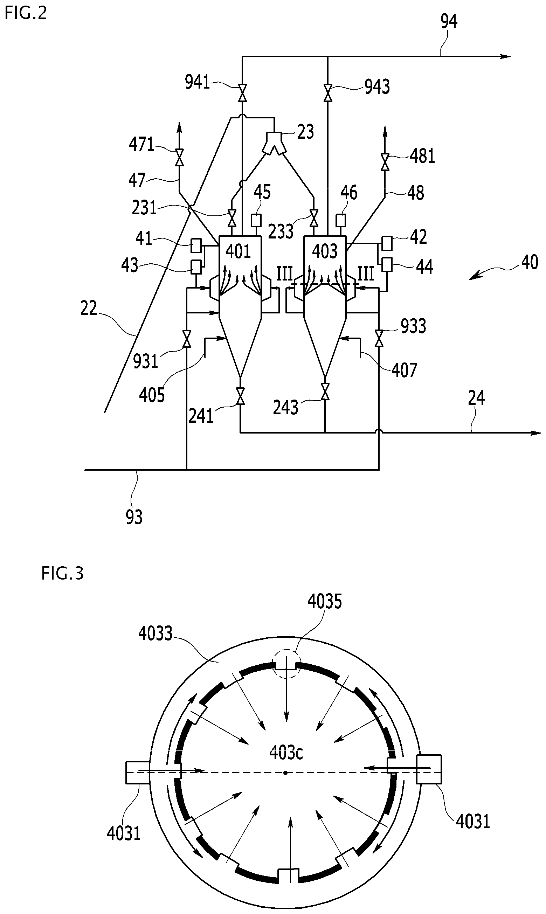

FIG. 2 schematically illustrates a reformer 40 included in the molten iron manufacturing apparatus 100 shown in FIG. 1. A structure of the reformer 40 shown in FIG. 2 is an example for describing the present invention, and the present invention is not limited thereto. Accordingly, the reformer 40 may have another structure. For example, the reformer 40 may be mounted to have a plurality of units.

The reformer 40 includes a first reformer 401 and a second reformer 403. The first reformer 401 and the second reformer 403 have the same structures. Accordingly, one of the first reformer 401 and the second reformer 403 may be employed, and the other one may remain as backup. When one of the reformers is being repaired or fails, the other reformer may be used. As described above, a plurality of valves are closed or opened in order to alternately employ the first reformer 401 and the second reformer 403.

The compacted iron supplying pipe 22 is connected to a distributing chute 23 disposed over the reformer 40 to supply reduced iron through the distributing chute 23. The reduced iron is selectively supplied to one of the first reformer 401 and the second reformer 403 through the distributing chute 23. The reduced iron supplied to the first reformer 401 or the second reformer 403 serves as a reforming reaction catalyst, and a reformed gas obtained by reforming a mixed gas supplied through the mixed gas pipe 93 can be supplied through the reformed gas pipe 94. Meanwhile, the reduced iron that has been completely used as the reforming reaction catalyst is returned to the compacted iron manufacturing device 20 through the compacted iron returning pipe 24. Although not shown in FIG. 2, the compacted iron completely used may be fed to the outside of the first reformer 401 and the second reformer 403 by using a screw feeder device or the like.

Meanwhile, when valves 231 and 233 are closed, the first reformer 401 and the second reformer 403 are sealed without gas leakage therefrom. The valves 231 and 233 are opened and closed to supply reduced iron to the first reformer 401 or the second reformer 403. Further, when valves 241 and 243 are closed, the first reformer 401 and the second reformer 403 are sealed without gas leakage therefrom. The valves 241 and 243 are opened and closed to control an amount of the reduced iron discharged from the first reformer 401 and the second reformer 403 through the compacted iron returning pipe 24.

The mixed gas is selectively supplied to the first reformer 401 or the second reformer 403 through the mixed gas pipe 93. Values 931 and 933 are used to selectively supply the mixed gas to the first reformer 401 or the second reformer 403

The mixed gas is converted into a reformed gas in the first reformer 401 or the second reformer 403, and is discharged to the outside through the gas pipe 94. Valves 941 and 943 are respectively mounted in the gas pipe 94 in back directions of the first reformer 401 and the second reformer 403 to control an amount of the reformed gas discharged to the outside.

Further, if necessary, discharge gas pipes 47 and 48 are respectively mounted in the first reformer 401 and the second reformer 403 to discharge an internal gas, and valves 471 and 481 are respectively mounted in the discharge gas pipe 47 and 48. Meanwhile, nitrogen supplying pipes 405 and 407 are respectively mounted in the first reformer 401 and the second reformer 403 to supply nitrogen when the first reformer 401 or the second reformer 403 is purged.

Pressure gauges 41 and 42 are respectively mounted in the first reformer 401 and the second reformer 403 to measure internal pressures of the first reformer 401 and the second reformer 403. Internal states of the first reformer 401 and the second reformer 403 may be monitored by measuring the internal pressures of the first reformer 401 and the second reformer 403. Differential pressure gauges 43 and 44 are respectively mounted in the first reformer 401 and the second reformer 403 to measure a differential pressure by gas flows generated in the first reformer 401 and the second reformer 403. It is possible to recognize whether the reduced iron is appropriately operated as the reforming reaction catalyst by measuring ventilation resistance of the reduced iron from the differential pressure. Meanwhile, level meters 45 and 46 are respectively mounted in the first reformer 401 and the second reformer 403 to measure heights of reduced iron formed in the first reformer 401 and the second reformer 403.

FIG. 3 is a cross-sectional view schematically illustrating an internal cross-sectional structure of a reformer 403 taken along a line III-III of FIG. 2. The internal cross-sectional structure of the reformer 403 shown in FIG. 3 is merely an example for describing the present invention, and the present invention is not limited thereto. Accordingly, the reformer 403 may have another internal cross-sectional structure.

As shown in FIG. 3, a plurality of openings 4035 are separately formed at a predetermined interval in a circumferential direction in a mixed gas supplier 4033 of the reformer 403 to be connected with an inside thereof. Accordingly, as indicated by arrows, a mixed gas flows into the reformer 403 through a pair of mixed gas inlets 4031 and is rotated along the annular mixed gas supplier 4033. The mixed gas inlets 4031 are formed to face each other. The mixed gas is annularly rotated toward a reformer center 403c through the openings to be injected into the reformer 403 in the circumferential direction. As a result, it is possible to efficiently reform a mixed gas by using a reforming reaction catalyst.

Hereinafter, the operating process of the reformer 40 (see FIG. 1) will be described in further detail with reference to FIG. 2 and FIG. 3. This operating process of the reformer 40 is merely an example for describing the present invention, and the present invention is not limited thereto. Accordingly, the reformer 40 may be operated according to another operating process.

When the distributing chute 23 (see FIG. 2) selects a charging direction of the reduced iron supplied from the compacted iron manufacturing device 20 (see FIG. 2) as a direction of the first reformer 401 (see FIG. 2), the valve 231 (see FIG. 2) is opened to charge the reduced iron into the first reformer 401 through the compacted iron supplying pipe 22. When the level meter 45 senses that the height of a packed bed formed by the reduced iron in the first reformer 401 reaches a predetermined value, the distributing chute 23 changes the charging direction of the reduced iron to a direction of the second reformer 403 (see FIG. 2)

Accordingly, the valve 231 is closed, and the valve 233 (see FIG. 2) is opened to charge the reduced iron into the second reformer 403. Further, when the level meter 46 (see FIG. 2) senses that the height of a packed bed formed by the reduced iron in the second reformer 403 reaches a predetermined value, the valve 233 (see FIG. 2) is closed, and the charging of the reduced iron through the compacted iron supplying pipe 22 is stopped.

Next, the valve 931 (see FIG. 2) is opened to introduce a mixed gas passing through the mixed gas pipe 93 (see FIG. 2) into the first reformer 401 through the mixed gas inlet 4031 (see FIG. 3). When it is sensed by the pressure gauge 41 (see FIG. 2) that a pressure of the first reformer 401 is equal to or greater than a predetermined value, the valve 941 is opened to discharge the reformed gas through the gas pipe 94. The reformed gas that is uniformly supplied into the first reformer 401 is catalyzed by the action of the catalyst of the reduced iron in the first reformer 401 to contain a large amount of CO and H₂ by Chemical Formula 1. Meanwhile, in the first reformer 401, as a chemical reaction of Chemical Formula 1 is performed, the reduced iron serving as the compacted iron may be abraded or a carbon component may be precipitated by a chemical reaction of Chemical Formula 2.

[Chemical Formula 2] CH₄ → C + 2H₂ 2CO → C + CO₂

Accordingly, porosity of a reduced iron packed bed formed in the first reformer 401 may be deteriorated to non-uniformly form a gas flow in the first reformer 401. As a result, this may deteriorate a reaction rate of Chemical Formula 1. This situation may be sensed by the differential pressure gauge 43. When a differential pressure measured by the differential pressure gauge 43 is equal to or higher than a predetermined value, the valves 931 and 941 (see FIG. 2) may be closed to block supply of the mixed gas to the mixed gas to the first reformer 401, and the valve 933 may be opened to supply the mixed gas to the second reformer 403. DeletedTexts As a result, the operation of the first reformer 401 may be identically realized in the second reformer 403.

Meanwhile, the valves 931 and 941 are closed, and then the valve 471 (see FIG. 2) of the discharge gas pipe 47 (see FIG. 2) is opened to discharge the internal gas of the first reformer 401 to the outside. When it is determined by the pressure gauge 41 that the internal pressure of the first reformer 401 is lower than the predetermined value by the gas discharge, nitrogen is injected into the first reformer 401 through the nitrogen supplying pipe 405 (see FIG. 2) to purge the remaining mixed gas. After nitrogen is injected for a predetermined time and the purging is completed, the valve 241 of the first reformer 401 is opened to discharge the reduced iron included in the first reformer 401. The discharged reduced iron is recovered by the compacted iron returning pipe 24 and is charged to the melter-gasifier 30 together with the compacted iron manufactured in the compacted iron manufacturing device 10. Further, when it is determined by the level meter 45 that all of the reduced iron is discharged from the first reformer 401, the supply of nitrogen is stopped and the reduced iron is re-charged to the first reformer 401.

Meanwhile, when the differential pressure sensed by the differential pressure gauge 44 (see FIG. 2) is equal to or higher than the predetermined value in the second reformer 403, the valves 933 and 943 (see FIG. 2) are closed to block the supply of the mixed gas supplied to the second reformer 403, and the valve 931 is opened to supply the mixed gas to the first reformer 401. As a result, the reformed gas may be manufactured in the first reformer 401, and the completely used compacted iron may be discharged from the second reformer 403.

As described above, it is possible to switch and operate the first reformer 401 and the second reformer 403 included in the reformer 40. As a result, the process of converting the mixed gas to the reformed gas may be performed by using the reduced iron to perform the reaction of Chemical Formula 1 under a good catalyst condition.

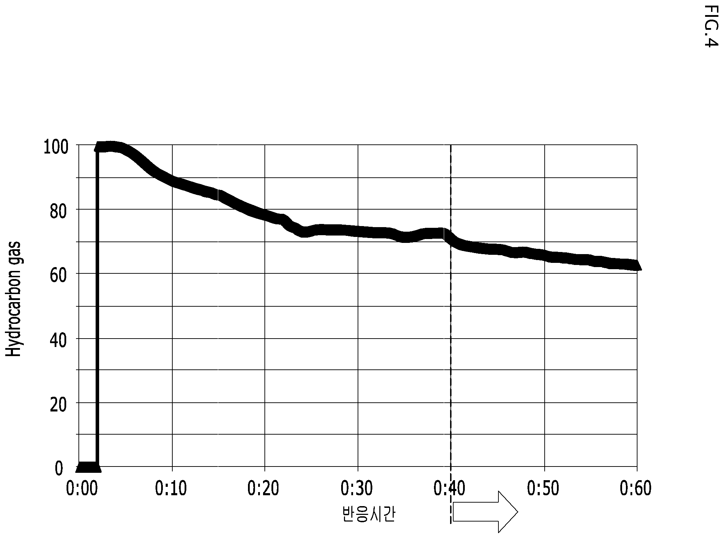

FIG. 4 is a graph illustrating a conversion rate of hydrocarbon to a reducing gas according to the elapse of a contact time with reduced iron.

As shown in FIG. 4, as a contact time during which hydrocarbon contacts reduced iron passes, the hydrocarbon is converted into a reducing gas by Chemical Formula 1. Herein, when the contact time reaches a predetermined time, an amount of a carbon component generated by Chemical Formula 2 and the like exceeds a predetermined level. Accordingly, converting efficiency of hydrocarbon by Chemical Formula 1 deteriorates by 70 % or less. Thus, as in the reformer 40 (see FIG. 2), the reduced iron included in the reformer 40 may be substituted with new reduced iron in order to re-increase the converting efficiency of the hydrocarbon.

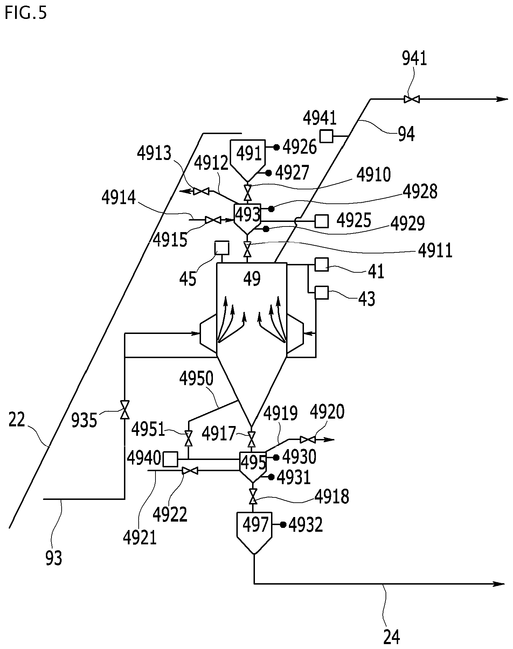

FIG. 5 schematically illustrates a modification of the reformer 40 included in the molten iron manufacturing apparatus 100 shown in FIG. 1. The reformer 49 shown in FIG. 5 is merely an example for describing the present invention, and the present invention is not limited thereto. Accordingly, the reformer 49 may have another structure. Further, the structure of the reformer 49 shown in FIG. 5 is similar to that of the reformer 40 shown in FIG. 2, so like portions use like reference numerals and a detailed description thereof will be omitted.

As shown in FIG. 5, in the reformer 49, reduced iron may be charged to an upper side thereof in a gravitational direction and is discharged to a lower side thereof, and a mixed gas may be reformed in a counter-current direction in which it is supplied to the reformer 49 in an opposite direction to the gravitational direction. Herein, the compacted iron supplying pipe 22, reduced iron charging hoppers 491 and 493 connected in series to pass the reduced iron therethrough, and valves 4910 and 4911 are disposed in front of the reformer 49 to be connected thereto. Herein, the valve 4910 is disposed between the reduced iron charging hoppers 491 and 493 to adjust a differential pressure between the reduced iron charging hoppers 491 and 493, and the valve 4911 is disposed between the reduced iron charging hopper 493 and the reformer 49. The reduced iron charging hopper 491 receives reduced iron from the compacted iron supplying pipe 225 in order to charge the reduced iron to the reformer 49 which is maintained to be higher than atmospheric pressure. Further, the reduced iron charging hopper 493 uniformly adjusts a pressure between the reduced iron charging hopper 491 and the reformer 49 to smoothly charge the compacted iron to the reformer 49. The valves 4910 and 4911 may be gas-sealed to efficiently charge the reduced iron to the reformer 49. Further, upper level meters 4926 and 4928 and lower level meters 4927 and 4929 are respectively mounted to the reduced iron charging hoppers 491 and 493 to measure levels of the reduced iron stacked in the reduced iron charging hoppers 491 and 493. In addition, a level meter 45 is mounted in the reformer 49 to continuously measure a height of the reduced iron stacked therein.

Meanwhile, the compacted iron returning pipe 24, reduced iron discharging hoppers 495 and 497 to pass and discharge the reduced iron therethrough, and valves 4917 and 4918 are disposed in back of the reformer 49 to be connected thereto. Herein, the valve 4917 is disposed between the reformer 49 and the reduced iron charging hopper 495, and the valve 4918 is disposed between the reduced iron charging hoppers 495 and 497 to adjust a differential pressure between the reduced iron charging hoppers 495 and 497. The reduced iron discharging hopper 495 discharges the reduced iron from the reformer 49 which is maintained to be higher than atmospheric pressure to the atmosphere. To that end, the reduced iron discharging hopper 497 uniformly adjusts a pressure between the reformer 49 and the reduced iron discharging hopper 495 to smoothly discharge the reduced iron from the reformer 49. The valves 4917 and 4918 may be gas-sealed to efficiently discharge the reduced iron from the reformer 49. Further, an upper level meter 4930 and a lower level meter 4931 are mounted to the reduced iron discharging hopper 495, and an upper level meter 4932 is mounted to the reduced iron discharging hopper 497. Accordingly, heights of the reduced iron stacked in the reduced iron discharging hoppers 495 and 497 are measured.

A back-pressure line 4912, a pressurization line 4914, valves 4913 and 4915, a differential pressure gauge 4925 are mounted in the reduced iron charging hopper 493. The back-pressure line 4912 discharges an internal gas of the reduced iron charging hopper 493 by controlling the valve 4913 in order to reduce a pressure of the reduced iron charging hopper 493. The pressurization line 4914 injects an inert gas such as nitrogen into the reduced iron charging hopper 493 while using the valve 4915 to pressurize it. Further, a pressure difference with the reformer 49 is measured by using the differential pressure gauge 125. A back-pressure line 4919, a pressurization line 4921, valves 4920 and 4922, and a differential pressure gauge 4940 are mounted in the reduced iron discharging hopper 495 to have the same functions. In addition, an equalizing line 4950 and a valve 4951 are mounted between the reduced iron discharging hopper 495 and the reformer 49. A gas analyzer 4941 is mounted in the reformed gas pipe 94 to monitor a composition of the reformed gas discharged from the reformer 49.

Hereinafter, an operating process of the reformer 49 shown in FIG. 5 will be described in further detail. This operating process is merely an example for describing the present invention, and the present invention is not limited thereto. Accordingly, the reformer 49 may be operated according to another process.

First, reduced iron transported through the compacted iron supplying pipe 22 is charged into the reduced iron charging hopper 491. When it is monitored by the upper level meter 4926 that the reduced iron is stacked up to a portion of the upper level meter 4926 of the reduced iron charging hopper 491, the supply of the reduced iron through the compacted iron supplying pipe 22 is stopped. When it is monitored by the upper level meter 4926 that the stacked height of the reduced iron is reduced below the portion of the lower level meter 4927, i.e., the reduced iron charging hopper 491 becomes empty, the reduced iron is re-supplied through the compacted iron supplying pipe 22. When it is monitored that the reduced iron is stacked up to the portion of the upper level meter 4926, the supply of the reduced iron is stopped.

Further, when it is monitored by the lower level meter 4927 that the reduced iron is stacked up to a portion of the lower level meter 4927, the valve 4913 is opened to perform a back pressure increase of the reduced iron charging hopper 493 through the back-pressure line 4912. When it is determined by the pressure gauge 4925 that an internal pressure of the reduced iron charging hopper 493 reaches atmospheric pressure, the valve 4910 is opened to start to charge the reduced iron from the reduced iron charging hopper 491 to the reduced iron charging hopper 493. Then, when it is determined that the reduced iron is filled in the reduced iron charging hopper 493 through the upper level meter 4928, the valve 4910 is closed to stop the charge of the reduced iron, and the value 4913 is closed.

Next, the valve 4915 is opened to pressurize the reduced iron charging hopper 493 by injecting the inert gas into the reduced iron charging hopper 493 through the pressurization line 4914. Further, when the internal pressure of the reduced iron charging hopper 493 measured by the pressure gauge 4925 is the same as the pressure of the reformer 49, the valve 4915 is closed to stop the pressurization of the reduced iron charging hopper 493. Then, the valve 4911 is opened to charge the reduced iron from the reduced iron charging hopper 493 to the reformer 49. Meanwhile, when it is sensed by the lower level meter 4929 that the reduced iron charging hopper 493 is empty, the valve 4911 is closed. This charging process is repeatedly performed until it is sensed by the level meter 45 that the reduced iron is filled in the reformer 49 to have a height that is equal to or higher than a predetermined level.

When the compacted iron is filled in the reformer 49, a valve 935 is opened to supply the mixed gas to the reformer 49 through the mixed gas pipe 93 to reform it. A reformed gas generated in the reformer 49 is discharged to the outside through the reformed gas pipe 94 by opening the valve 941.

Meanwhile, the reduced iron is discharged to the low side of the reformer 49 and is re-charged to the reformer 49 at a predetermined time interval in order to prevent deterioration of the reforming reaction efficiency caused by Chemical Formula 2 and the like. The reduced iron is discharged from the reformer 49 through a following process.

First, the valve 4922 is opened to inject an inert gas into the reduced iron discharging hopper 495 through the pressurization line 4921. When an internal pressure of the reduced iron discharging hopper 495 measured by using the pressure gauge 4940 is the same as a sum of pressures of the pressure gauge 41 of the reformer 49 and the differential pressure gauge 43, the valve 4922 is closed to stop the injection of the inert gas. Then, the valve 4917 is opened to transport the completely used reduced iron from the reformer 49 to the reduced iron discharging hopper 495. In this case, while the reduced iron is charged from the reformer 49 to the discharging hopper 495 by opening the valve 4951, an equal pressure is maintained between the reduced iron discharging hopper 495 and the reformer 49, thereby smoothly discharging the reduced iron. Meanwhile, when it is determined by the upper level meter 4940 that the reduced iron is filled in the reduced iron discharging hopper 495, the valve 4917 is closed to stop the charge of the reduced iron, and the valve 4951 is closed.

Next, the valve 4920 is opened to back-pressurize the reduced iron discharging hopper 495 through the back-pressure line 4919. Then, when it is determined by the pressure gauge 4940 that an internal pressure of the reduced iron discharging hopper 495 is back-pressurized to a normal pressure and when it is determined by the level meter 4932 that the height of the reduced iron included in the reduced iron discharging hopper 497 is reduced to be lower than the portion of the level meter 4932, the valve 4918 is opened to discharge the reduced iron to the reduced iron discharging hopper 497. As described above, some of the reduced iron included in the reformer 49 is discharged and new reduced iron is supplied to the reformer 49 at a predetermined time interval. Accordingly, the mixed gas is always converted into the reformed gas under a good catalyst reaction condition by a packed bed formed of good quality reduced iron.

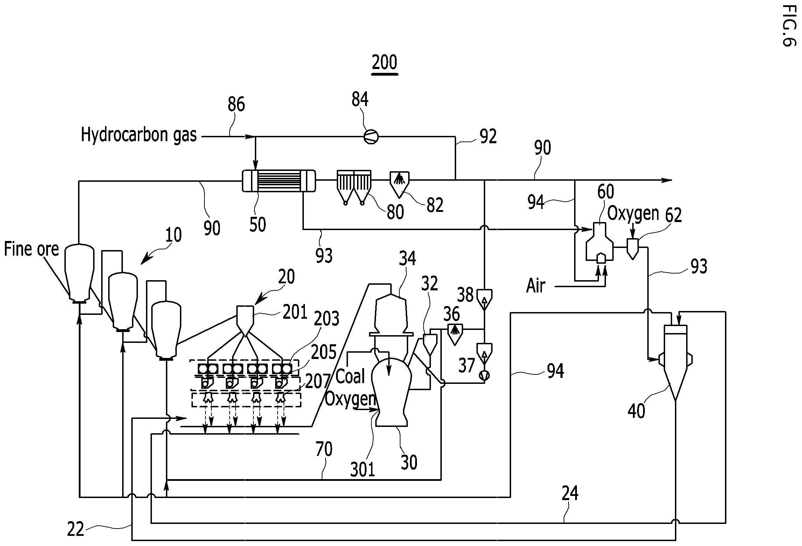

FIG. 6 schematically illustrates a molten iron manufacturing apparatus 200 according to a second exemplary embodiment of the present invention. The molten iron manufacturing apparatus 200 shown in FIG. 6 is merely an example for describing the present invention, and the present invention is not limited thereto. Accordingly, the molten iron manufacturing apparatus 200 may have another form. Meanwhile, a structure of the molten iron manufacturing apparatus 200 shown in FIG. 6 is similar to that of the molten iron manufacturing apparatus 100 shown in FIG. 1, so like portions use like reference numerals and a detailed description thereof will be omitted.

As shown in FIG. 6, a mixture of the reducing gases discharged from the melter-gasifier 30 and the reformed gas discharged from the reformer 40 is additionally supplied to each of a plurality of fluidized-bed reduction reactors 10. In other words, the fluidized-bed reduction reactors 10 have different functions for converting iron ore into reduced iron depending on a plurality of steps such as pre-heating, heating, and final heating. Accordingly, in more detail, it is possible to improve the functions of the fluidized-bed reduction reactors 10 at each of the steps by mixing the reducing gas discharged from the melter-gasifier 30 and the reformed gas discharged from the reformer 40 and supplying a mixture to each of the fluidized-bed reduction reactors 10.

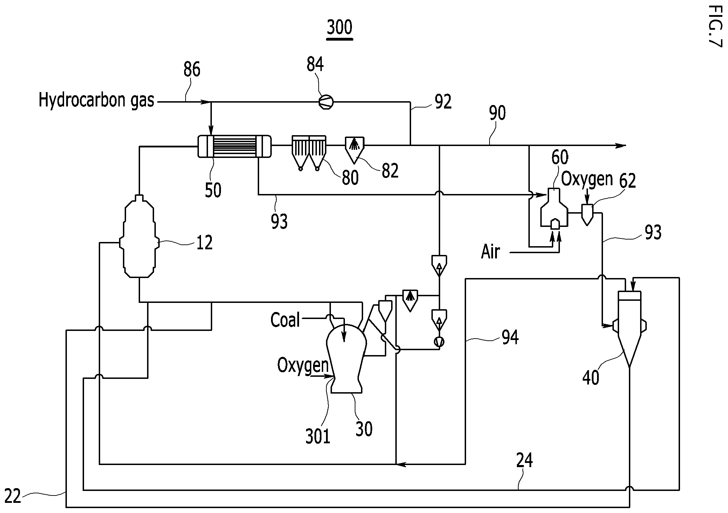

FIG. 7 schematically illustrates a molten iron manufacturing apparatus 300 according to a third exemplary embodiment of the present invention. The molten iron manufacturing apparatus 300 shown in FIG. 7 is merely an example for describing the present invention, and the present invention is not limited thereto. Accordingly, the molten iron manufacturing apparatus 300 may have another form. A structure of the molten iron manufacturing apparatus 300 shown in FIG. 7 is similar to that of the molten iron manufacturing apparatus 100 shown in FIG. 1, so like portions use like reference numerals and a detailed description thereof will be omitted.

As shown in FIG. 7, a packed-bed reduction reactor 12 may be employed as a reduction reactor. Specifically, molten iron can be manufactured in the melter-gasifier 30 by using a packed bed which is formed by charging iron ore to the packed-bed reduction reactor 12. In this case, in the packed-bed reduction reactor 12, some of the reduced iron supplied to the melter-gasifier 30 is supplied to the reformer 40 to be used as a reforming reaction catalyst, and the completely used reforming reaction catalyst is charged to the melter-gasifier 30 to thereby manufacture the molten iron.

In contrast with the aforementioned exemplary embodiment of the present invention, according to a conventional art, the discharge gas is compressed for circulation and reforming of the discharge gas and oxygen is removed from therefrom. In this case, a large amount of energy is consumed. Further, most of the aforementioned energy is consumed for compressing the discharge gas. Accordingly, economic efficiency may be lost because a cost to reform and circulate the discharge gas as compared with coal cost that is reduced by using the aforementioned method is increased.

Further, in the molten iron manufacturing process, nitrogen gas mixed in the reducing gas to prevent local cooling and powder clogging in the melter-gasifier and the reactor is not separated and removed in the circulating and reforming of the discharge gas. As a result, nitrogen gas serving as an inert gas among the reducing gas remains and is integrated, thereby deteriorating the quality of the reducing gas supplied to the reduction reactor. Accordingly, this deteriorates an effect of reducing coal consumption according to reformation and use of the discharge gas and also increases energy consumed to reform the discharge gas, i.e., to remove carbon dioxide, to deteriorate an effect of removing carbon dioxide. Particularly, since the quality of the reducing gas deteriorates depending on nitrogen integration, a supply of the reducing gas obtained by reforming the discharge gas is required to be limited to a predetermined level or less, thereby deteriorating the effect of reducing coal consumption of the melter-gasifier.

The reason for reducing the coal consumption is a reduction of coal reserves used for manufacturing the molten iron and a price increase caused by a global coal consumption increase. An example of a base material for manufacturing the molten iron, which can replace coal, may include a natural gas mainly containing hydrocarbon. The natural gas field has been actively developed, and the price of the natural gas is expected to be reduced and stabilized in the long term since there is an increase in shale gas mining based on the North America region. However, it is required to reform hydrocarbon included in a natural gas into a reducing gas such as hydrogen and carbon monoxide to use the natural gas when molten iron is manufactured, and there is a problem in which a large amount of thermal energy is consumed in the reforming process.

Accordingly, when the molten iron is manufactured by using a hydrocarbon gas, the hydrocarbon gas is reformed into a reducing gas by using high-temperature gas-reforming equipment. Next, iron ore is reduced from a solid state thereof by using the reformed gas, and then is melted in an electric furnace or the like. However, according to this method, a huge amount of energy is consumed for the operation of the high temperature gas equipment and melting of the reduced iron ore, and thus economic efficiency may deteriorate due to a supply price variation of the natural gas depending on locational conditions.

Further, a method of injecting the natural gas through a tuyere through which an oxidizing agent is injecting to combust cokes or general coal is added. According to this method, the hydrocarbon is reformed into a reducing gas by using combustion heat of cokes or general coal and is supplied to a fluidized-bed reduction reactor or the like connected with an upper portion of the blast furnace and the melter-gasifier together with a reducing gas generated by the combustion of cokes or general coal, thereby reducing consumption of cokes or general coal. However, according to this method, an amount of heat generated by combustion of cokes or general coal around a tuyere of the melter-gasifier and the blast furnace due to energy consumed to reform the hydrocarbon is lower than an amount of heat required to operate the blast furnace and melter-gasifier. Accordingly, there is a limit in consumption of cokes or general coal by injecting a natural gas.

In contrast with the aforementioned conventional art, according to an exemplary embodiment of the present invention, the hydrocarbon is mixed with a discharge gas of the reduction reactor and is reformed to be used. As a result, reducing power of the reducing gas is increased, and the consumption of coal required to manufacture molten iron is reduced. This will be described in more detail by using the following experimental example. The experimental example is merely an example for describing the present invention, and the present invention is not limited thereto.

### Experimental Example

A molten iron manufacturing apparatus having the same structure as shown in FIG. 1 was examined. In the molten iron manufacturing apparatus, 180 tons of molten iron was manufactured. 18,500 Nm³/h of natural gas was supplied as a hydrocarbon gas, and this natural gas was mixed with a discharge gas of a fluidized-bed reduction reactor to manufacture 300,631 Nm³ of supply gas. Then, it was supplied to the fluidized-bed reduction reactor. In further detail, a mixed gas obtained by mixing 18,500 Nm³/h of natural gas with the discharge gas was reformed to manufacture 97,020 Nm³ of reformed gas, and then the reformed gas was mixed with 231,084 Nm³/h of reducing gas generated in a discharge gas. The mixed gas was heated by using 5,061 Nm³/h of oxygen. Fine ore and a sub-material were charged at 308 ton/h to the fluidized-bed reduction reactor, and reduced iron was manufactured as compacted iron by using an agglomeration apparatus and was charged at 232 ton/h to the melter-gasifier together with 22 ton/h of flux. Coal was charged at 117 ton/h to the melter-gasifier. As a result, 180 ton/h of molten iron was manufactured in the melter-gasifier.

### Comparative Example

Without supplying the natural gas to the molten iron manufacturing apparatus, the discharge gas discharged from the fluidized-bed reduction reactor was reformed by using a reformer by, e.g., removing oxygen from the discharge gas. Accordingly, a supply gas mixed into the reducing gas generated in the melter-gasifier was supplied to the fluidized-bed reduction reactor to reduce iron ore. Detailed information of the experiment is disclosed in European Patent Laid-Open Publication No. 1,689,892, and may be easily understood by a skilled person in the art, so it will be omitted.

### Experimental result

Table 1 shows properties of reducing gas, reformed gas, and supply gas according to the experimental example and properties of the supply gas according to the comparative example.

**[Table 1]**

| NO | Properties | | Experimental Example | | | Comparative Example |
|---|---|---|---|---|---|---|
| | | | reducing gas | reformed gas | supply gas | supply gas |
| 1 | Flow rate (Nm³/h) | | 231,804 | 97,020 | 300,631 | 300,505 |
| 2 | Temperature (°C) | | 1,050 | 720 | 720 | 720 |
| 3 | Pressure (bar.g) | | 4.00 | 6.00 | 3.80 | 3.8 |
| 4 | Gas composition (%) | CO | 63.26 | 38.65 | 55.78 | 56.82 |
| | | CO₂ | 9.58 | 10.95 | 10.09 | 8.78 |
| | | H₂ | 17.15 | 34.48 | 22.86 | 16.75 |
| | | H₂O | 4.64 | 5.86 | 4.34 | 3.43 |
| | | CH₄ | 1.50 | 6.20 | 3.02 | 1.64 |
| | | N₂ | 3.87 | 3.86 | 3.90 | 12.59 |

In the experiment example, in me case or producing 1 ton or molten iron, the coal consumption was 650 kg/ton of molten iron. In contrast, in the comparative example, in the case of producing 1 ton of molten iron, the coal consumption was 750-850 kg/ton of molten iron. Accordingly, the experimental example has coal consumption that is reduced by about 15 % to 31 % as compared with the comparative example. This is because the quality of the supply gas deteriorates due to nitrogen integration according to reformation and circulation of the discharge gas to limit an amount of the discharge gas that is reformed and circulated to increase an amount of the reducing gas supplied to the fluidized-bed reduction reactor according to the comparative example. Further, a corresponding coal consumption reduction is limited. Meanwhile, an amount of nitrogen included in the supply gas is more significantly reduced in the experimental example than in the comparative example, and an amount of hydrogen included in the supply gas is increased according to the use of the hydrocarbon gas. As the quality of the supply gas is improved, reduction operation efficiency of the fluidized-bed reduction reactor is more significantly increased in the experimental example than in the comparative example.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### [Reference numerals]

10. fluidized-bed reduction reactor
12. packed-bed reduction reactor
20. compacted iron manufacturing device
22. compacted iron supplying pipe
23. distributing chute
24. compacted iron returning pipe
30. melter-gasifier
40, 49, 401, 403. reformer
41, 42. pressure gauge
43, 44. differential pressure gauge
45, 46. level meter
47, 48. discharge gas pipe
50. heat exchanger
60. first heater
62. first heater
70. supply gas pipe
80. dry dust collector
82. water cooling device
84. compressor
90. discharge gas pipe
92. discharge gas branch pipe
93. mixed gas pipe
94. reformed gas pipe
100, 200. molten iron manufacturing apparatus
231, 233, 241, 243, 471, 491, 931, 933, 941, 943, 4913, 4914, 4910, 4911, 4951, 4917, 4918, 4920, 4922, 4951. valve
405, 407. nitrogen supplying pipe
491, 493. reduced iron charging hopper
495, 497. reduced iron discharging hopper
4031. mixed gas inlet
4033. mixed gas supplier
4035. opening
4914, 4921. pressurization line

## Claims

1. A molten iron manufacturing method comprising:
supplying a discharge gas from a reduction reactor (10) that converts iron ore to reduced iron;
supplying a mixed gas that is obtained by mixing some branched discharge gas and a hydrocarbon gas;
supplying a reformed gas by reforming the mixed gas; and
injecting a reducing gas, discharged from a melter-gasifier (30) connected with the reduction reactor (10) to receive the reduced iron, and the reformed gas into the reduction reactor (10),
**characterized in that**
the supplying of the reformed gas includes
supplying some of the reduced iron as a reforming reaction catalyst, and
reforming the mixed gas by using the reforming reaction catalyst.

2. The molten iron manufacturing method of claim 1, wherein said some reduced iron is directly supplied from the reduction reactor (10) in the supplying of said some reduced iron as the reforming reaction catalyst.

3. The molten iron manufacturing method of claim 1, further comprising
agglomerating the reduced iron by compressing it,
wherein said some reduced iron is agglomerated and supplied in the supplying of said some reduced iron as the reforming reaction catalyst.

4. The molten iron manufacturing method of claim 2, further comprising
recovering said some reduced iron used as the reforming reaction catalyst and supplying it to the melter-gasifier (30).

5. The molten iron manufacturing method of claim 2, wherein the reformed gas is generated in at least one reformer (40) to which said some reduced iron in the supplying of the reformed gas is charged, and nitrogen is supplied to the reformer (40).

6. The molten iron manufacturing method of claim 5, wherein the mixed gas is annularly rotated in the reformer (40) and is injected in a circumferential direction.

7. The molten iron manufacturing method of claim 1, wherein the reformed gas is generated in a plurality of reformers (40) to which said some reduced iron is charged to be used as the reforming reaction catalyst in the supplying of the reformed gas, and the reformers (40) includes a first reformer (401) and a second reformer (403).

8. The molten iron manufacturing method of claim 7, wherein said some reduced iron is charged into the second reformer (403) after charging of said some reduced iron into the first reformer (401) is completed.

9. The molten iron manufacturing method of claim 7, wherein, when a differential pressure of the first reformer (401) is equal to or higher than a predetermined value, an inflow of the mixed gas into the first reformer (401) is blocked, and a reformed gas is generated in the second reformer (403) by supplying the mixed gas to the second reformer (403).

10. The molten iron manufacturing method of claim 7, wherein, when a differential pressure of the first reformer (401) is equal to or higher than a predetermined value, the reformed gas is externally outputted.

11. The molten iron manufacturing method of claim 7, wherein, after the reformed gas of the first reformer (401) is discharged, the first reformer (401) is purged, the reforming reaction catalyst included in the first reformer (401) is discharged, and said some reduced iron is supplied to the first reformer (401).

12. The molten iron manufacturing method of claim 1, wherein, in the supplying of the reformed gas, said some reduced iron is continuously charged to and discharged from the reformer that generates the reformed gas.

13. The molten iron manufacturing method of claim 1, wherein the supplying of the reformed gas includes:
providing a plurality of reduced iron charging hoppers (491, 493) connected to the reformer (49) in front thereof and a plurality of reduced iron discharging hoppers (495, 497) connected to the reformer (49) in back thereof;
adjusting a differential pressure between the reduced iron charging hoppers (491,493);
charging said some reduced iron to the reformer through the reduced iron charging hoppers (491, 493);
adjusting a differential pressure between the reduced iron discharging hoppers (495, 497); and
discharging said some reduced iron from the reformer through the reduced iron discharging hoppers (495, 497).

14. The molten iron manufacturing method of claim 1, further comprising:
performing primary heating on the mixed gas by allowing it to indirectly contact the discharge gas; and
performing secondary heating on the mixed gas by using oxygen.

15. The molten iron manufacturing method of claim 14, wherein the discharge gas is cooled and cleaned in the supplying of the discharge gas.

16. The molten iron manufacturing method of claim 14, wherein the mixed gas is heated to 1000 °C or less in the performing of the primary heating on the mixed gas.

17. The molten iron manufacturing method of claim 16, wherein the mixed gas is heated in a range of 1100 °C to 1200 °C in the performing of the secondary heating on the mixed gas.

18. The molten iron manufacturing method of claim 1, wherein the reduction reactor includes a packed-bed reduction reactor (12) or a plurality of fluidized-bed reduction reactors (10) in the supplying of the discharge gas.

19. The molten iron manufacturing method of claim 18, wherein when the reduction reactor includes the fluidized-bed reduction reactors (10), a mixture obtained by mixing the reducing gas and the reformed gas is supplied to each of the fluidized-bed reduction reactors (10).

20. A molten iron manufacturing apparatus (100, 200, 300) comprising:
a reduction reactor (10, 12) configured to reduce iron ore into reduced iron;
a melter-gasifier (30) connected with the reduction reactor (10, 12) to manufacture molten iron by receiving the reduced iron and to supply a reducing gas to the reduction reactor (10, 12);
a discharge gas pipe (90) connected with the reduction reactor (10, 12) to pass a discharge gas discharged from the reduction reactor (10, 12) therethrough;
a discharge gas branch pipe (92) connected with the discharge gas pipe (90) to pass another discharge gas that is branched from the discharge gas, and configured to receive a hydrocarbon gas and supply a mixed gas obtained by mixing the hydrocarbon gas with the discharge gas;
a supply gas pipe (70) configured to supply the reducing gas to the melter-gasifier (30) by connecting the reduction reactor (10, 12) with the melter-gasifier (30); and
a reformed gas pipe (94) configured to connect the reformer (40) with the supply gas pipe (70), and to supply a mixture obtained by mixing the reformed gas with the reducing gas to the melter-gasifier (30),
**characterized by** at least one reformer (40) connected with the reduction reactor (10, 12) to receive some of the reduced iron, and connected with the discharge gas branch pipe (92) to supply a reformed gas by reforming the mixed gas by said some reduced iron;

21. The molten iron manufacturing apparatus of claim 20, further comprising
a heat exchanger (50) connected with the discharge gas pipe (90) and the discharge gas branch pipe (92), to heat the mixed gas by the discharge gas.

22. The molten iron manufacturing apparatus of claim 20, further comprising a compacted iron manufacturing device (20) connected with the reduction reactor (10, 12) and the melter-gasifier (30), to supply compacted iron obtained by agglomerating the reduced iron to the melter-gasifier (30), and connected with the reformer (40) to supply said some reduced iron as the compacted iron.

23. The molten iron manufacturing apparatus of claim 22, further comprising:
a compacted iron supplying pipe (22) configured to connect the compacted iron manufacturing device (20) with the reformer (40), and to supply the compacted iron to the reformer (40); and
a compacted iron returning pipe (24) configured to connect the compacted iron manufacturing device (20) with the reformer (40), and to return other compacted iron that has completely been used to the compacted iron manufacturing device (20).

24. The molten iron manufacturing apparatus of claim 20, further comprising:
a first heater (60) connected with the heat exchanger (50) and the discharge gas pipe (90) to heat the mixed gas by receiving and combusting the discharge gas; and
a second heater (62) connected with the first heater (60) to re-heat the mixed gas by receiving oxygen.

25. The molten iron manufacturing apparatus of claim 20, wherein said at least one reformer (40) includes a plurality of reformers adapted to receive a reforming reaction catalyst, and the reformers include a first reformer (401) and a second reformer (403), and
the molten iron manufacturing apparatus further comprises:
a mixed gas supplying pipe (93) configured to connect the heat exchanger (50) with the first reformer (401) and the second reformer (403);
a purge gas supplying pipe (405, 407) connected to the first reformer (401) and the second reformer (403); and
a discharge gas pipe (47, 48) connected to the first reformer (401) and the second reformer (403).

26. The molten iron manufacturing apparatus of claim 25, further comprising:
a pressure gauge (41, 42) mounted in each of the first reformer (401) and the second reformer (403) to measure each internal pressure of the first reformer (401) and the second reformer (403);
a differential pressure gauge (43, 44) mounted in each of the first reformer (401) and the second reformer (403) to measure a difference between pressures of upper portions of the first reformer (401) and the second reformer (403) and an internal pressure of the mixed gas supplying pipe (93) by connecting the upper portions thereof with the mixed gas supplying pipe (93); and
a level meter (45, 46) mounted in each of the first reformer (401) and the second reformer (403) to measure a height of the reforming reaction catalyst.

27. The molten iron manufacturing apparatus of claim 20, further comprising:
a plurality of reduced iron charging hoppers (491, 493) disposed in front of the reformer (49) and connected in series with the reformer (49); and
a plurality of reduced iron discharging hoppers (495, 497) disposed in back of the reformer (49) and connected in series with the reformer (49).

28. The molten iron manufacturing apparatus of claim 27, further comprising
an inert gas injecting pipe mounted in at least one of the reduced iron charging hoppers (491, 493) and the reduced iron discharging hoppers (495, 497) to pressurize an inside of the hopper by injecting an inert gas into the hopper.

29. The molten iron manufacturing apparatus of claim 20, wherein the reformer (40) includes an annular mixed gas supplier to surround a center of the reformer (40), a plurality of openings are separately formed at a predetermined interval in the mixed gas supplier, and the mixed gas is injected into the reformer through the openings.

30. The molten iron manufacturing apparatus of claim 20, wherein the reduction reactor includes a packed-bed reduction reactor (12) or a plurality of fluidized-bed reduction reactors (10).

31. The molten iron manufacturing apparatus of claim 30, wherein, when the reduction reactor includes the fluidized-bed reduction reactors (10), the supply gas pipe (70) is configured to connect each of the fluidized-bed reduction reactors (10) with the melter-gasifier (30).

## Patentansprüche

1. Eisenschmelzeherstellungsverfahren, umfassend:
Zuführen eines Entladegases aus einem Reduktionsreaktor (10), der Eisenerz in reduziertes Eisen umwandelt;
Zuführen eines gemischten Gases, das durch Mischen einer gewissen Menge abgezweigten Endladegases und eines Kohlenwasserstoffgases erlangt wird;
Zuführen eines reformierten Gases durch Reformieren des gemischten Gases; und
Einspritzen eines Reduktionsgases, das aus einem mit dem Reduktionsreaktor (10) verbundenen Schmelzvergaser (30) zum Aufnehmen des reduzierten Eisens entladen wurde, und des reformierten Gases in den Reduktionsreaktor (10),
**dadurch gekennzeichnet, dass**
das Zuführen des reformierten Gases Folgendes beinhaltet:
Zuführen einer gewissen Menge des reduzierten Eisens als Reformierungsreaktionskatalysator, und
Reformieren des gemischten Gases durch Verwenden des Reformierungsreaktionskatalysators.

2. Eisenschmelzeherstellungsverfahren nach Anspruch 1, wobei die gewisse Menge reduzierten Eisens beim Zuführen der gewissen Menge reduzierten Eisens als der Reformierungsreaktionskatalysator direkt aus dem Reduktionsreaktor (10) zugeführt wird.

3. Eisenschmelzeherstellungsverfahren nach Anspruch 1, ferner umfassend:
Agglomerieren des reduzierten Eisens, indem es verdichtet wird,
wobei die gewisse Menge reduzierten Eisens agglomeriert und beim Zuführen der gewissen Menge reduzierten Eisens als der Reformierungsreaktionskatalysator bereitgestellt wird.

4. Eisenschmelzeherstellungsverfahren nach Anspruch 2, ferner umfassend:
Wiedergewinnen der gewissen Menge reduzierten Eisens, das als der Reformierungsreaktionskatalysator verwendet wurde, und Zuführen derselben zu dem Schmelzvergaser (30)

5. Eisenschmelzeherstellungsverfahren nach Anspruch 2, wobei das reformierte Gas in mindestens einem Reformer (40), in den die gewisse Menge reduzierten Eisens beim Zuführen des reformierten Gases geladen wird, erzeugt wird und Stickstoff dem Reformer (40) zugeführt wird.

6. Eisenschmelzeherstellungsverfahren nach Anspruch 5, wobei das gemischte Gas in dem Reformer (40) ringförmig rotiert wird und in einer Umfangsrichtung eingespritzt wird.

7. Eisenschmelzeherstellungsverfahren nach Anspruch 1, wobei das reformierte Gas in einer Vielzahl von Reformern (40), in die beim Zuführen des reformierten Gases die gewisse Menge reduzierten Eisens zur Verwendung als der Reformierungsreaktionskatalysator geladen wird, erzeugt wird und die Reformer (40) einen ersten Reformer (401) und einen zweiten Reformer (403) beinhalten.

8. Eisenschmelzeherstellungsverfahren nach Anspruch 7, wobei die gewisse Menge reduzierten Eisens in den zweiten Reformer (403) geladen wird, nachdem das Laden der gewissen Menge reduzierten Eisens in den ersten Reformer (401) abgeschlossen ist.

9. Eisenschmelzeherstellungsverfahren nach Anspruch 7, wobei, wenn ein Differenzdruck des ersten Reformers (401) gleich einem vorbestimmten Wert oder höher ist, ein Zufluss des gemischten Gases in den ersten Reformer (401) blockiert wird und ein reformiertes Gas in dem zweiten Reformer (403) erzeugt wird, indem das gemischte Gas dem zweiten Reformer (403) zugeführt wird.

10. Eisenschmelzeherstellungsverfahren nach Anspruch 7, wobei, wenn ein Differenzdruck des ersten Reformers (401) gleich einem vorbestimmten Wert oder höher ist, das reformierte Gas extern ausgegeben wird.

11. Eisenschmelzeherstellungsverfahren nach Anspruch 7, wobei nach dem Entladen des reformierten Gases des ersten Reformers (401) der erste Reformer (401) gespült, der in dem ersten Reformer (401) beinhaltete Reformierungsreaktionskatalysator entladen und die gewisse Menge reduzierten Eisens dem ersten Reformer (401) zugeführt wird.

12. Eisenschmelzeherstellungsverfahren nach Anspruch 1, wobei beim Zuführen des reformierten Gases die gewisse Menge reduzierten Eisens ununterbrochen in den Reformer, der das reformierte Gas erzeugt, geladen und aus diesem entladen wird.

13. Eisenschmelzeherstellungsverfahren nach Anspruch 1, wobei das Zuführen des reformierten Gases Folgendes beinhaltet:
Bereitstellen einer Vielzahl von Ladetrichtern (491, 493) für das reduzierte Eisen, die mit dem Reformer (49) an dessen Vorderseite verbunden sind, und einer Vielzahl von Entladetrichtern (495, 497) für das reduzierte Eisen, die mit dem Reformer (49) an dessen Rückseite verbunden sind;
Anpassen eines Differenzdrucks zwischen den Ladetrichtern (491, 493) für das reduzierte Eisen;
Laden der gewissen Menge reduzierten Eisens in den Reformer durch die Ladetrichter (491, 493) für das reduzierte Eisen;
Anpassen eines Differenzdrucks zwischen den Entladetrichtern (495, 497) für das reduzierte Eisen; und
Entladen der gewissen Menge reduzierten Eisens aus dem Reformer durch die Entladetrichter (495, 497) für das reduzierte Eisen.

14. Eisenschmelzeherstellungsverfahren nach Anspruch 1, ferner umfassend:
Durchführen eines primären Erwärmens an dem gemischten Gas, indem ermöglicht wird, dass es indirekt mit dem Entladegas in Kontakt kommt; und
Durchführen eines sekundären Erwärmens an dem gemischten Gas durch Verwendung von Sauerstoff.

15. Eisenschmelzeherstellungsverfahren nach Anspruch 14, wobei das Entladegas beim Zuführen des Ablassgases gekühlt und gereinigt wird.

16. Eisenschmelzeherstellungsverfahren nach Anspruch 14, wobei das gemischte Gas beim Durchführen der primären Erwärmung an dem gemischten Gas auf 1000 °C oder weniger erwärmt wird.

17. Eisenschmelzeherstellungsverfahren nach Anspruch 16, wobei das gemischte Gas beim Durchführen der sekundären Erwärmung an dem gemischten Gas in einem Bereich von 1100 °C bis 1200 °C erwärmt wird.

18. Eisenschmelzeherstellungsverfahren nach Anspruch 1, wobei der Reduktionsreaktor beim Zuführen des Ablassgases einen Festbett-Reduktionsreaktor (12) oder eine Vielzahl von Wirbelschicht-Reduktionsreaktoren (10) beinhaltet.

19. Eisenschmelzeherstellungsverfahren nach Anspruch 18, wobei, wenn der Reduktionsreaktor die Wirbelschicht-Reduktionsreaktoren (10) beinhaltet, eine durch Mischen des reduzierten Gases und des reformierten Gases erlangte Mischung jedem der Wirbelschicht-Reduktionsreaktoren (10) zugeführt wird.

20. Eisenschmelzeherstellungsvorrichtung (100, 200, 300), umfassend:
einen Reduktionsreaktor (10, 12), der dazu konfiguriert ist, Eisenerz zu reduziertem Eisen zu reduzieren;
einen Schmelzvergaser (30), der mit dem Reduktionsreaktor (10, 12) verbunden ist, um eine Eisenschmelze durch Aufnehmen des reduzierten Eisens herzustellen und ein reduziertes Gas dem Reduktionsreaktor (10, 12) zuzuführen;
eine Entladegasleitung (90), die mit dem Reduktionsreaktor (10, 12) verbunden ist, um ein aus dem Reduktionsreaktor (10, 12) entladenes Entladegas dort hindurch zu leiten;
eine Entladegaszweigleitung (92), die mit der Entladegasleitung (90) verbunden ist, um ein anderes Entladegas zu leiten, das aus dem Entladegas abgezweigt wurde, und die dazu konfiguriert ist, ein Kohlenwasserstoffgas aufzunehmen und ein durch Mischen des Kohlenwasserstoffgases mit dem Entladegas erlangtes gemischtes Gas zuzuführen;
eine Zufuhrgasleitung (70), die dazu konfiguriert ist, das Reduktionsgas dem Schmelzvergaser (30) zuzuführen, indem sie den Reduktionsreaktor (10, 12) mit dem Schmelzvergaser (30) verbindet; und
eine Leitung für reformiertes Gas (94), die dazu konfiguriert ist, den Reformer (40) mit der Zufuhrgasleitung (70) zu verbinden und eine durch Mischen des reformierten Gases mit dem Reduktionsgas erlangte Mischung dem Schmelzvergaser (30) zuzuführen,
**dadurch gekennzeichnet, dass** mindestens ein Reformer (40) mit dem Reduktionsreaktor (10, 12) verbunden ist, um eine gewisse Menge reduzierten Eisens aufzunehmen, und mit der Entladegaszweigleitung (92) verbunden ist, um ein reformiertes Gas durch Reformieren des gemischten Gases durch die gewisse Menge reduzierten Eisens zuzuführen.

21. Eisenschmelzeherstellungsvorrichtung nach Anspruch 20, ferner umfassend:
einen Wärmetauscher (50) der mit der Entladegasleitung (90) und der Entladegaszweigleitung (92) verbunden ist, um das gemischte Gas durch das Entladegas zu erwärmen.

22. Eisenschmelzeherstellungsvorrichtung nach Anspruch 20, ferner umfassend eine verdichtetes Eisen herstellende Vorrichtung (20), die mit dem Reduktionsreaktor (10, 12) und dem Schmelzvergaser (30) verbunden ist, um durch Agglomerieren des reduzierten Eisen erlangtes verdichtetes Eisen dem Schmelzvergaser (30) zuzuführen, und die mit dem Reformer (40) verbunden ist, um die gewisse Menge reduzierten Eisens als das verdichtete Eisen zuzuführen.

23. Eisenschmelzeherstellungsvorrichtung nach Anspruch 22, ferner umfassend:
eine Zufuhrleitung (22) für verdichtetes Eisen, die dazu konfiguriert ist, die verdichtetes Eisen herstellende Vorrichtung (20) mit dem Reformer (40) zu verbinden und das verdichtete Eisen dem Reformer (40) zuzuführen; und
eine Rückführleitung (24) für verdichtetes Eisen, die dazu konfiguriert ist, die verdichtetes Eisen herstellende Vorrichtung (20) mit dem Reformer (40) zu verbinden und anderes verdichtetes Eisen, das vollständig verbraucht wurde, zu der verdichtetes Eisen herstellenden Vorrichtung (20) zurückzuführen.

24. Eisenschmelzeherstellungsvorrichtung nach Anspruch 20, ferner umfassend:
eine erste Erwärmungseinrichtung (60), die mit dem Wärmetauscher (50) und der Entladegasleitung (90) verbunden ist, um das gemischte Gas zu erwärmen, indem das Entladegas aufgenommen und verbrannt wird; und
eine zweite Erwärmungseinrichtung (62), die mit der ersten Erwärmungseinrichtung (60) verbunden ist, um das gemischte Gas durch Aufnahme von Sauerstoff erneut zu erwärmen.

25. Eisenschmelzeherstellungsvorrichtung nach Anspruch 20, wobei der mindestens eine Reformer (40) eine Vielzahl von Reformern beinhaltet, die dazu ausgelegt sind, einen Reformierungsreaktionskatalysator aufzunehmen, und die Reformer einen ersten Reformer (401) und einen zweiten Reformer (403) beinhalten, und
wobei die Eisenschmelzeherstellungsvorrichtung ferner Folgendes umfasst:
eine Zufuhrleitung (93) für gemischtes Gas, die dazu konfiguriert ist, den Wärmetauscher (50) mit dem ersten Reformer (401) und dem zweiten Reformer (403) zu verbinden;
eine Zufuhrleitung (405, 407) für Spülgas, die mit dem ersten Reformer (401) und dem zweiten Reformer (403) verbunden ist; und
eine Entladegasleitung (47, 48), die mit dem ersten Reformer (401) und dem zweiten Reformer (403) verbunden ist.

26. Eisenschmelzeherstellungsvorrichtung nach Anspruch 25, ferner umfassend:
einen Druckmesser (41, 42), der in jedem von dem ersten Reformer (401) und dem zweiten Reformer (403) angebracht ist, um jeden Innendruck des ersten Reformers (401) und des zweiten Reformers (403) zu messen;
einen Differenzdruckmesser (43, 44), der in jedem von dem ersten Reformer (401) und dem zweiten Reformer (403) angebracht ist, um eine Differenz zwischen Drücken von oberen Abschnitten des ersten Reformers (401) und des zweiten Reformers (403) und einem Innendruck der Zufuhrleitung (93) für gemischtes Gas zu messen, indem die oberen Abschnitte davon mit der Zufuhrleitung (93) für gemischtes Gas verbunden werden; und
einen Füllstandmesser (45, 46), der in jedem von dem ersten Reformer (401) und dem zweiten Reformer (403) angebracht ist, um eine Höhe des Reformierungsreaktionskatalysators zu messen.

27. Eisenschmelzeherstellungsvorrichtung nach Anspruch 20, ferner umfassend:
eine Vielzahl von Ladetrichtern (491, 493) für reduziertes Eisen, die an der Vorderseite des Reformers (49) angeordnet und in Reihe mit dem Reformer (49) verbunden sind; und
eine Vielzahl von Entladetrichtern (495, 497) für reduziertes Eisen, die an der Rückseite des Reformers (49) angeordnet und in Reihe mit dem Reformer (49) verbunden sind.

28. Eisenschmelzeherstellungsvorrichtung nach Anspruch 27, ferner umfassend:
eine Einspritzleitung für Inertgas, die in mindestens einem der Ladetrichter (491, 493) für reduziertes Eisen und der Entladetrichter (495, 497) für reduziertes Eisen angebracht ist, um eine Innenseite des Trichters mit Druck zu beaufschlagen, indem ein Inertgas in den Trichter eingespritzt wird.

29. Eisenschmelzeherstellungsvorrichtung nach Anspruch 20, wobei der Reformer (40) eine ringförmige Zufuhreinrichtung für gemischtes Gas beinhaltet, um eine Mitte des Reformers (40) zu umgeben, eine Vielzahl von Öffnungen in vorbestimmten Intervallen getrennt in der Zufuhreinrichtung für gemischtes Gas ausgebildet ist und das gemischte Gas durch die Öffnungen in den Reformer eingespritzt wird.

30. Eisenschmelzeherstellungsvorrichtung nach Anspruch 20, wobei der Reduktionsreaktor einen Festbett-Reduktionsreaktor (12) oder eine Vielzahl von Wirbelschicht-Reduktionsreaktoren (10) beinhaltet.

31. Eisenschmelzeherstellungsvorrichtung nach Anspruch 30, wobei, wenn der Reduktionsreaktor die Wirbelschicht-Reduktionsreaktoren (10) beinhaltet, die Zufuhrgasleitung (70) dazu konfiguriert ist, jeden der Wirbelschicht-Reduktionsreaktoren (10) mit dem Schmelzvergaser (30) zu verbinden.

## Revendications

1. Procédé de fabrication de fer en fusion comprenant :
la fourniture d'un gaz d'évacuation depuis un réacteur de réduction (10) qui convertit un minerai de fer en fer réduit ;
la fourniture d'un gaz mixte qui est obtenu en mélangeant un gaz d'évacuation dérivé et un gaz d'hydrocarbure ;
la fourniture d'un gaz reformé en reformant le gaz mixte ; et
l'injection d'un gaz réducteur, évacué depuis un appareil de fusion-gazéification (30) raccordé au réacteur de réduction (10) pour recevoir le fer réduit, et le gaz reformé dans le réacteur de réduction (10),
**caractérisé en ce que**
la fourniture du gaz reformé comporte
la fourniture d'une partie du fer réduit en tant que catalyseur de réaction de reformage, et
le reformage du gaz mixte en utilisant le catalyseur de réaction de reformage.

2. Procédé de fabrication de fer en fusion selon la revendication 1, dans lequel ladite partie de fer réduit est fournie directement depuis le réacteur de réduction (10) lors de la fourniture de ladite partie de fer réduit en tant que catalyseur de réaction de reformage.

3. Procédé de fabrication de fer en fusion selon la revendication 1, comprenant en outre
l'agglomération du fer réduit en le compressant,
dans lequel ladite partie de fer réduit est agglomérée et fournie lors de la fourniture de ladite partie de fer réduit en tant que catalyseur de réaction de reformage.

4. Procédé de fabrication de fer en fusion selon la revendication 2, comprenant en outre
la récupération de ladite partie de fer réduit utilisée en tant que catalyseur de réaction de reformage et sa fourniture à l'appareil de fusion-gazéification (30).

5. Procédé de fabrication de fer en fusion selon la revendication 2, dans lequel le gaz reformé est généré dans au moins un reformeur (40) dans lequel ladite partie de fer réduit lors de la fourniture du gaz reformé est chargée, et l'azote est fourni au reformeur (40).

6. Procédé de fabrication de fer en fusion selon la revendication 5, dans lequel le gaz mixte est mis en rotation de façon annulaire dans le reformeur (40) et est injecté dans une direction circonférentielle.

7. Procédé de fabrication de fer en fusion selon la revendication 1, dans lequel le gaz reformé est généré dans une pluralité de reformeurs (40) dans lesquels ladite partie de fer réduit est chargée pour être utilisée en tant que catalyseur de réaction de reformage lors de la fourniture du gaz reformé, et les reformeurs (40) comportent un premier reformeur (401) et un second reformeur (403).

8. Procédé de fabrication de fer en fusion selon la revendication 7, dans lequel ladite partie de fer réduit est chargée dans le second reformeur (403) après que le chargement de ladite partie de fer réduit dans le premier reformeur (401) est achevé.

9. Procédé de fabrication de fer en fusion selon la revendication 7, dans lequel, lorsqu'une pression différentielle du premier reformeur (401) est supérieure ou égale à une valeur prédéterminée, une arrivée du gaz mixte dans le premier reformeur (401) est bloquée, et un gaz reformé est généré dans le second reformeur (403) en fournissant le gaz mixte au second reformeur (403).

10. Procédé de fabrication de fer en fusion selon la revendication 7, dans lequel, lorsqu'une pression différentielle du premier reformeur (401) est supérieure ou égale à une valeur prédéterminée, le gaz reformé est fourni en sortie à l'extérieur.

11. Procédé de fabrication de fer en fusion selon la revendication 7, dans lequel, après que le gaz reformé du premier reformeur (401) est évacué, le premier reformeur (401) est purgé, le catalyseur de réaction de reformage inclus dans le premier reformeur (401) est évacué, et ladite partie de fer réduit est fournie au premier reformeur (401).

12. Procédé de fabrication de fer en fusion selon la revendication 1, dans lequel, lors de la fourniture du gaz reformé, ladite partie de fer réduit est chargée en continu dans le reformeur qui génère le gaz reformé et est évacuée de celui-ci.

13. Procédé de fabrication de fer en fusion selon la revendication 1, dans lequel la fourniture du gaz reformé comporte :
la prévision d'une pluralité de trémies de chargement de fer réduit (491, 493) raccordées au reformeur (49) à l'avant de celui-ci et d'une pluralité de trémies d'évacuation de fer réduit (495, 497) raccordées au reformeur (49) à l'arrière de celui-ci ;
le réglage d'une pression différentielle entre les trémies de chargement de fer réduit (491, 493) ;
le chargement de ladite partie de fer réduit dans le reformeur par le biais des trémies de chargement de fer réduit (491, 493) ;
le réglage d'une pression différentielle entre les trémies d'évacuation de fer réduit (495, 497) ; et
l'évacuation de ladite partie de fer réduit depuis le reformeur par le biais des trémies d'évacuation de fer réduit (495, 497).

14. Procédé de fabrication de fer en fusion selon la revendication 1, comprenant en outre :
la réalisation d'un chauffage principal sur le gaz mixte en lui permettant d'entrer indirectement en contact avec le gaz d'évacuation ; et
la réalisation d'un chauffage secondaire sur le gaz mixte en utilisant de l'oxygène.

15. Procédé de fabrication de fer en fusion selon la revendication 14, dans lequel le gaz d'évacuation est refroidi et nettoyé lors de la fourniture du gaz d'évacuation.

16. Procédé de fabrication de fer en fusion selon la revendication 14, dans lequel le gaz mixte est chauffé à 1 000 °C ou moins lors de la réalisation du chauffage principal sur le gaz mixte.

17. Procédé de fabrication de fer en fusion selon la revendication 16, dans lequel le gaz mixte est chauffé dans une plage de 1 100 °C à 1 200 °C lors de la réalisation du chauffage secondaire sur le gaz mixte.

18. Procédé de fabrication de fer en fusion selon la revendication 1, dans lequel le réacteur de réduction comporte un réacteur de réduction à lit fixe (12) ou une pluralité de réacteurs de réduction à lit fluidisé (10) lors de la fourniture du gaz d'évacuation.

19. Procédé de fabrication de fer en fusion selon la revendication 18, dans lequel lorsque le réacteur de réduction comporte les réacteurs de réduction à lit fluidisé (10), un mélange obtenu en mélangeant le gaz réducteur et le gaz reformé est fourni à chacun des réacteurs de réduction à lit fluidisé (10).

20. Appareil de fabrication de fer en fusion (100, 200, 300) comprenant :
un réacteur de réduction (10, 12) configuré pour réduire un minerai de fer en fer réduit ;
un appareil de fusion-gazéification (30) raccordé au réacteur de réduction (10, 12) pour fabriquer du fer en fusion en recevant le fer réduit et pour fournir un gaz réducteur au réacteur de réduction (10, 12) ;
un tuyau de gaz d'évacuation (90) raccordé au réacteur de réduction (10, 12) pour faire passer un gaz d'évacuation évacué depuis le réacteur de réduction (10, 12) au travers ;
un tuyau de dérivation de gaz d'évacuation (92) raccordé au tuyau de gaz d'évacuation (90) pour faire passer un autre gaz d'évacuation qui est dérivé du gaz d'évacuation, et configuré pour recevoir un gaz d'hydrocarbure et fournir un gaz mixte obtenu en mélangeant le gaz d'hydrocarbure avec le gaz d'évacuation ;
un tuyau de gaz de fourniture (70) configuré pour fournir le gaz réducteur à l'appareil de fusion-gazéification (30) en raccordant le réacteur de réduction (10, 12) à l'appareil de fusion-gazéification (30) ; et
un tuyau de gaz reformé (94) configuré pour raccorder le reformeur (40) au tuyau de gaz de fourniture (70), et pour fournir un mélange obtenu en mélangeant le gaz reformé avec le gaz réducteur à l'appareil de fusion-gazéification (30),
**caractérisé par** au moins un reformeur (40) raccordé au réacteur de réduction (10, 12) pour recevoir une partie du fer réduit, et raccordé au tuyau de dérivation de gaz d'évacuation (92) pour fournir un gaz reformé en reformant le gaz mixte par ladite partie de fer réduit.

21. Appareil de fabrication de fer en fusion selon la revendication 20, comprenant en outre
un échangeur de chaleur (50) raccordé au tuyau de gaz d'évacuation (90) et au tuyau de dérivation de gaz d'évacuation (92), pour chauffer le gaz mixte par le gaz d'évacuation.

22. Appareil de fabrication de fer en fusion selon la revendication 20, comprenant en outre
un dispositif de fabrication de fer compacté (20) raccordé au réacteur de réduction (10, 12) et à l'appareil de fusion-gazéification (30), pour fournir du fer compacté obtenu en agglomérant le fer réduit à l'appareil de fusion-gazéification (30), et raccordé au reformeur (40) pour fournir ladite partie de fer réduit en tant que fer compacté.

23. Appareil de fabrication de fer en fusion selon la revendication 22, comprenant en outre :
un tuyau de fourniture de fer compacté (22) configuré pour raccorder le dispositif de fabrication de fer compacté (20) au reformeur (40), et pour fournir le fer compacté au reformeur (40) ; et
un tuyau de renvoi de fer compacté (24) configuré pour raccorder le dispositif de fabrication de fer compacté (20) au reformeur (40), et pour renvoyer un autre fer compacté qui a été totalement utilisé au dispositif de fabrication de fer compacté (20).

24. Appareil de fabrication de fer en fusion selon la revendication 20, comprenant en outre :
un premier élément chauffant (60) raccordé à l'échangeur de chaleur (50) et au tuyau de gaz d'évacuation (90) pour chauffer le gaz mixte en recevant et en brûlant le gaz d'évacuation ; et
un second élément chauffant (62) raccordé au premier élément chauffant (60) pour chauffer à nouveau le gaz mixte en recevant de l'oxygène.

25. Appareil de fabrication de fer en fusion selon la revendication 20, dans lequel ledit au moins un reformeur (40) comporte une pluralité de reformeurs adaptés pour recevoir un catalyseur de réaction de reformage, et les reformeurs comportent un premier reformeur (401) et un second reformeur (403), et
l'appareil de fabrication de fer en fusion comprend en outre :
un tuyau de fourniture de gaz mixte (93) configuré pour raccorder l'échangeur de chaleur (50) au premier reformeur (401) et au second reformeur (403) ;
un tuyau de fourniture de gaz de purge (405, 407) raccordé au premier reformeur (401) et au second reformeur (403) ; et
un tuyau de gaz d'évacuation (47, 48) raccordé au premier reformeur (401) et au second reformeur (403).

26. Appareil de fabrication de fer en fusion selon la revendication 25, comprenant en outre :
un manomètre (41, 42) monté dans chacun du premier reformeur (401) et du second reformeur (403) pour mesurer chaque pression interne du premier reformeur (401) et du second reformeur (403) ;
un manomètre différentiel (43, 44) monté dans chacun du premier reformeur (401) et du second reformeur (403) pour mesurer une différence entre des pressions de portions supérieures du premier reformeur (401) et du second reformeur (403) et une pression interne du tuyau de fourniture de gaz mixte (93) en raccordant les portions supérieures de ceux-ci au tuyau de fourniture de gaz mixte (93) ; et
un limnimètre (45, 46) monté dans chacun du premier reformeur (401) et du second reformeur (403) pour mesurer une hauteur du catalyseur de réaction de reformage.

27. Appareil de fabrication de fer en fusion selon la revendication 20, comprenant en outre :
une pluralité de trémies de chargement de fer réduit (491, 493) disposées à l'avant du reformeur (49) et raccordées en série au reformeur (49) ; et
une pluralité de trémies d'évacuation de fer réduit (495, 497) disposées à l'arrière du reformeur (49) et raccordées en série au reformeur (49).

28. Appareil de fabrication de fer en fusion selon la revendication 27, comprenant en outre
un tuyau d'injection de gaz inerte monté dans au moins l'une des trémies de chargement de fer réduit (491, 493) et des trémies d'évacuation de fer réduit (495, 497) pour pressuriser un intérieur de la trémie en injectant un gaz inerte dans la trémie.

29. Appareil de fabrication de fer en fusion selon la revendication 20, dans lequel le reformeur (40) comporte un dispositif de fourniture de gaz mixte annulaire pour entourer un centre du reformeur (40), une pluralité d'ouvertures sont formées séparément à un intervalle prédéterminé dans l'appareil de fourniture de gaz mixte, et le gaz mixte est injecté dans le reformeur par le biais des ouvertures.

30. Appareil de fabrication de fer en fusion selon la revendication 20, dans lequel le réacteur de réduction comporte un réacteur de réduction à lit fixe (12) ou une pluralité de réacteurs de réduction à lit fluidisé (10).

31. Appareil de fabrication de fer en fusion selon la revendication 30, dans lequel, lorsque le réacteur de réduction comporte les réacteurs de réduction à lit fluidisé (10), le tuyau de gaz de fourniture (70) est configuré pour raccorder chacun des réacteurs de réduction à lit fluidisé (10) à l'appareil de fusion-gazéification (30).
